**Europäisches Patentamt**

**European Patent Office**

**Office européen des brevets**

(11) Veröffentlichungsnummer: **0 041 149**
**B2**

(12) **NEUE EUROPÄISCHE PATENTSCHRIFT**

(45) Veröffentlichungstag der neuen Patentschrift:
**27.01.88**

(21) Anmeldenummer: **81103557.5**

(22) Anmeldetag: **09.05.81**

(51) Int. Cl.⁴: **A 22 C 13/02**

(54) Verfahren und Vorrichtung zum innenseitigen Ölen von schlauchförmigem Verpackungsmaterial.

(30) Priorität: **31.05.80 DE 3020764**

(43) Veröffentlichungstag der Anmeldung:
**09.12.81 Patentblatt 81/49**

(45) Bekanntmachung des Hinweises auf die Patenterteilung:
**11.04.84 Patentblatt 84/15**

(45) Bekanntmachung des Hinweises auf die Entscheidung
über den Einspruch:
**27.01.88 Patentblatt 88/4**

(84) Benannte Vertragsstaaten:
**AT BE CH FR GB IT LI NL SE**

(56) Entgegenhaltungen:
**DE - A - 2 132 279**
**DE - A - 2 722 463**
**DE - C - 1 632 139**
**FR - A - 1 320 867**
**US - A - 2 583 654**
**US - A - 3 112 516**
**US - A - 3 209 398**
**US - A - 3 451 827**

(73) Patentinhaber: **Kollross, Günter, Am Wallerstädter**
**Weg 20, D-6080 Gross Gerau-Dornheim (DE)**

(72) Erfinder: **Steinbis, Fritz Karl, Helwigstrasse 64,**
**D-6080 Gross-Gerau (DE)**

(74) Vertreter: **Beyer, Werner, Dipl.-Ing., Staufenstrasse 36, II**
**P.O. Box 174109, D-6000 Frankfurt/Main (DE)**

ACTORUM AG

# Beschreibung

Die Erfindung betrifft ein Verfahren zum innenseitigen Ölen von schlauchförmigem Verpackungsmaterial während dessen axialer Raffung zu Schlauchraupen, wobei das Schlauchmaterial zwischen einer Abdichtstelle und der Raffstelle durch Einleitung von unter Überdruck stehender Luft aufgebläht wird und in den aufgeblähten Bereich Öl gegen die Innenseite des Schlauchmaterials eingespritzt wird, sowie eine Anordnung zur Durchführung eines solchen Verfahrens bei einer Raffvorrichtung mit einem hinter einem Raffwerkzeug fliegend gelagerten und durch das Raffwerkzeug bis zu einem Quetschwalzenpaar vor- und während des Raffens gesteuert wieder zurückfahrbaren Raffrohr, durch welches Luft unter Überdruck zum Aufblähen des Schlauchmaterials zwischen den Quetschwalzen und den Raffwerkzeugen zuführbar ist und das an seinem Öffnungsende eine Düse zum Einspritzen des durch eine Leitung innerhalb des Rohres zugeführten Öls aufweist.

Die innenseitige Ölung von schlauchförmigem Verpackungsmaterial wird vor allem bei Zelluloseschläuchen für die Wurstherstellung angewandt. Sie mindert die Schimmelbildung und verhindert das Eindringen von insbesondere dünnen Wurstbrät in die Poren des Schlauchmaterials, was bei Schäldarm überhaupt erst das mechanische Schälen der Wurst auf der Schälmaschine ermöglicht. Darüber hinaus lassen sich Schlauchraupen aus innen geöltem Schlauchmaterial gleichgültig welcher Art grundsätzlich leichter verarbeiten.

Bisher erfolgt das innenseitige Ölen von schlauchförmigem Verpackungsmaterial während dessen axialer Raffung zu Schlauchraupen durch kontinuierliches Einspritzen durch eine sogenannte Zweistoff-Düse unter Verwendung von Treibluft. Um den Druck innerhalb des aufgeblähten Materialabschnitts mit Rücksicht auf die Festigkeit des Schlauchmaterials zu begrenzen, muss deshalb für eine ständige Ableitung der überschüssigen Treibluft und des überschüssigen Öls unter Verwendung besonderer Ventileinrichtungen gesorgt werden, die aufwendig und teuer sind. Bei der üblichen Verwendung eines in den aufgeblähten Abschnitt des Schlauchmaterials beim Raffen ragenden Raffrohrs, durch welches sowohl das Öl und die Treibluft zugeführt wird als auch die Druckentlastung erfolgt, müssen demzufolge drei voneinander getrennte Kanäle innerhalb des Raffrohres vorgesehen werden, nämlich die Zuführkanäle für das Öl und die Treibluft und der Entlastungskanal für das überschüssige Luft-Öl-Gemisch. Die Erfahrung hat ferner gezeigt, dass beim Zurückfahren des Raffrohres während des Raffvorgangs sich vor der Düse innerhalb des Schlauchmaterials ein Luftpolster bildet, in welches das eingespritzte Öl nicht gelangt. Die Folge sind unberührte Bereiche des Schlauchmaterials, zumindest aber eine ungleichmässige Verteilung der Ölschicht. Derartig arbeitende Anlagen sind öffentlich vorbenutzt und gehören zum Stand der Technik nach Art. 54 (2) EPU.

Der Erfindung liegt die Aufgabe zugrunde, diese Nachteile zu vermeiden und ein Verfahren zum innenseitigen Ölen von schlauchförmigem Verpackungsmaterial während dessen axialer Raffung zu Schlauchraupen sowie eine Anordnung zu dessen Durchführung zu schaffen, die eine wesentlich gleichmässigere Ölung bei gleichzeitig geringerem Ölverbrauch sicherstellt und ohne besondere Massnahmen zur Durckentlastung des aufgeblähten Schlauchmaterials auskommt.

Verfahrensmässig wird diese Aufgabe in Übereinstimmung mit der Erfindung dadurch gelöst, dass die Einspritzung intermittierend ohne Treibluft erfolgt, wobei mit jedem Einspritzimpuls eine bestimmte Länge des Schlauchmaterials benetzt und die Impulsfolge im Verhältnis zur Fortbewegung des Schlauchmaterials derart bemessen wird, dass sich eine durchgehende Beschichtung des Schlauchmaterials mit dem eingespritzten Öl ergibt.

Die Erfindung geht von der bekannten Tatsache aus, dass die kontinuierliche Zerstäubung von Öl ohne Treibluft infolge der Kohäsionseigenschaften des Öls nicht möglich ist, was letztlich auch der Grund dafür gewesen ist, dass das innenseitige Ölen von schlauchförmigem Verpackungsmaterial bisher ausschliesslich unter Verwendung von Treibluft durchgeführt worden ist. Die Erprobung des erfindungsgemässen Verfahrens in der Praxis hat jedoch gezeigt, dass auf die Verwendung von Treibluft verzichtet werden kann, wenn die Einspritzung intermittierend erfolgt, wozu der Öldruck mindestens 10 bar betragen sollte. Des weiteren sollte die Dauer eines jeden Einspritzimpulses in der Grössenordnung von 1–10 msec. liegen. Mit diesen Werten lässt sich bei entsprechender Bemessung der Länge der Zwischenzeiten dennoch eine gleichmässige Verteilung des Öls auf der Innenseite des Schlauchmaterials gewährleisten.

Besondere Probleme treten auf, wenn die Einspritzstelle des Öls während des Raffens einer anschliessend vom ungerafften Schlauchmaterial abgetrennten Schlauchraupe gesteuert von einer Anfangstellung nahe der Quetschstelle in eine Endstellung hinter der Raffstelle verfährt, bei deren Erreichen die Öleinspritzung abgeschaltet wird. Dies ist ganz regelmässig der Fall bei der Verwendung von Raffrohren, die während des Raffens gesteuert zurückfahren und schliesslich das Raffwerkzeug verlassen, um ein Abschneiden der auf dem Raffrohr gebildeten Raupe durch eine unmittelbar hinter dem Raffwerkzeug angeordnete Schneideinrichtung zu ermöglichen. Wenn hieraufhin das Raffrohr erneut nach vorn in die Anfangsstellung für einen erneuten Raffvorgang fährt, würde zumindest der grösste Teil des vor den Raffwerkzeugen befindlichen aufgeblähten Schlauchmaterials ungeölt bleiben. Dieser Mangel wird in vorteilhafter Ausgestaltung des erfindungsgemässen Verfahrens dadurch beseitigt, dass die Öleinspritzung bereits beim Wiedervorfahren in die Anfangsstellung erneut zugeschaltet wird.

Eine Anordnung zur Durchführung des erfindungsgemässen Verfahrens bei einer Raffvorrichtung mit einem hinter einem Raffwerkzeug fliegend gelagerten und durch das Raffwerkzeug bis zu einem Quetschwalzenpaar vor- und während des Raffens gesteuert wieder zurückfahrbaren Raffrohr, durch welches Luft unter Überdruck zum Aufblähen des Schlauchmaterials zwischen den Quetschwalzen und den Raffwerkzeugen zuführbar ist und das an seinem Öffnungsende eine Düse zum Einspritzen des durch eine Leitung innerhalb des Rohres zugeführten Öls aufweist, zeichnet sich in erfindungsgemässer Ausgestaltung vor allem dadurch aus, dass die Einspritzdüse als Einstoff-Düse ausgebildet und an eine intermittierend arbeitende Stosspumpe angeschlossen ist. Zweckmässig ist die Pumpe eine beliebig ein- und ausschaltbare herkömmliche Einspritzpumpe, durch deren Ein- und Ausschaltung die Dauer der Öleinspritzung und deren zeitliche Koordination mit dem Raffvorgang bestimmt werden.

Die Einspritzpumpe kann zur tunlichen Kurzhaltung der Verbindungsleitung mit der Düse zusammen mit dem Raffrohr verfahrbar sein, wodurch es bei Verwendung nur eines einzigen Raffrohrs auch möglich ist, die Verbindungsleitung aus Metall auszuführen, das den hohen Drücken der Einspritzpumpe praktisch unelastisch widersteht. Besondere Probleme ergeben sich jedoch bei Raffvorrichtungen mit zwei an einer drehbaren Revolvereinrichtung zum abwechselnden Instellungbringen diametral zur Drehachse gegenüberliegend angeordneten Raffrohren. Theoretisch könnte hierbei die Ölzufuhr durch die Revolverachse erfolgen und innerhalb der Revolvereinrichtung durch mit der Schaltbewegung des Revolvers gekoppelte Ventile die erforderliche abwechselnde Versorgung der Einspritzdüsen an den Enden der beiden Raffrohre erfolgen. Die Abdichtung derartiger Ventile bereitet jedoch in der Praxis gegenüber den hohen Einspritzdrücken Schwierigkeiten und führt zu unannehmbaren Druckverlusten.

Nach einem besonderen Ausgestaltungsmerkmal der erfindungsgemässen Anordnung werden diese Schwierigkeiten dadurch überwunden, dass die Revolvereinrichtung um ihren Schaltwinkel vor- und zurückschaltbar ist. Durch diese Massnahme können auf begrenzter Länge flexible Schläuche in der Verbindungsleitung zwischen der Einspritzpumpe und den Einspritzdüsen verwendet werden, wobei in den Verbindungsleitungen vorzugsweise elektromagnetisch gesteuerte Ventile vorgesehen sind, welche abwechselnd geöffnet und geschlossen werden und dadurch nur die Düse des jeweils in Raffstellung befindlichen Raffrohrs mit der Einspritzpumpe verbindet.

Die Erfindung wird nachstehend in Verbindung mit der Zeichnung näher erläutert. Es zeigen:

Fig. 1 in schematischer Darstellung und teilweise im Längsschnitt eine Raffvorrichtung mit einer Anordnung zur Durchführung des erfindungsgemässen Verfahrens und

Fig. 2 einen Querschnitt nach Linie II–II in Fig. 1.

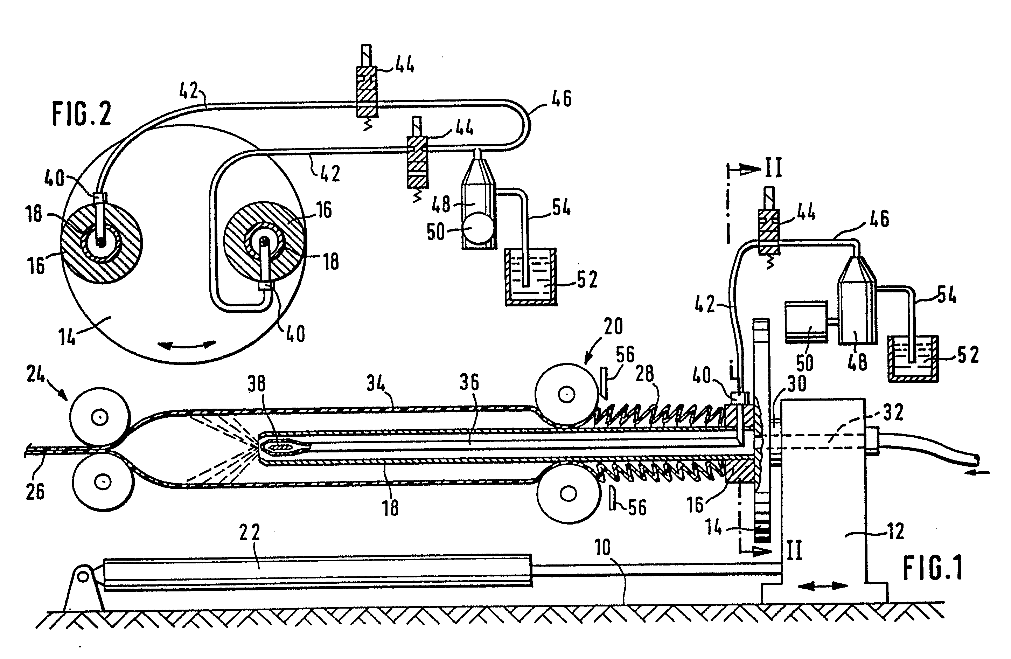

Die in Fig. 1 schematisch dargestellte Raffvorrichtung weist ein langgestrecktes Bett 10 mit einer (nicht gezeigten) Längsführung für einen Ständer 12 auf, an dem eine Revolverscheibe 14 durch im Ständer 12 enthaltene Antriebsmittel um 180° hin- und zurückschaltbar ist. An der Revolverscheibe 14 sind an diametral gegenüberliegenden Stellen mittels Halterungen 16 zwei langgestreckte Raffrohre 18 fliegend gelagert, von denen jeweils eines je nach der Schaltstellung der Revolverscheibe 14 mit einem Raffwerkzeug 20 zusammenarbeitet, das beispielsweise aus zwei drehend angetriebenen Raffrädern besteht.

Der Ständer 12 kann auf dem Bett 10 mit Hilfe eines Kraftzylinders 22 zwischen einer ersten Stellung, in welcher das eine Raffrohr nahezu vollständig durch das Raffwerkzeug 20 nach links mit Bezug auf Fig. 1 hindurchgefahren ist, und einer zweiten Stellung verschoben werden, in welcher das Raffrohr 18 aus dem Raffwerkzeug 20 nach rechts mit Bezug auf Fig. 1 zurückgefahren ist. In letzterer Stellung kann eine Umschaltung der Revolverscheibe 14 erfolgen.

In der ersterwähnten Stellung reicht das in das Raffwerkzeug eingefahrene Raffrohr bis kurz vor ein Quetschwalzenpaar 24, durch welches das zu raffende schlauchförmige Verpackungsmaterial 26 von einer nicht gezeigten Vorratsrolle her dichtend hindurch und weiter zu dem Raffwerkzeug 20 geführt ist, welches das Schlauchmaterial, wie bei 28 gezeigt, zu einer Schlauchraupe rafft. Das freie Ende dieser Schlauchraupe 28 stützt sich gegen die Halterung 16 ab, die zusammen mit der Revolverscheibe 14 und dem Raffrohr 18 während des Raffens durch Ausfahren des Kraftzylinders 22 nach rechts mit Fig. 1 bewegt wird.

Die Raffrohre 18 sind hohl ausgebildet und über einen durch den Ständer 12 und die Revolverscheibenwelle 30 verlaufenden Kanal 32 mit einer darin enthaltenen (nicht gezeigten) Ventileinrichtung derart abwechselnd mit unter geringem Überdruck stehender Luft versorgt, dass das Schlauchmaterial 26 im Bereich zwischen den Quetschwalzen 24 und dem Raffwerkzeug 20, wie bei 34 angedeutet, auf seinen vollen Umfang aufgebläht wird.

Durch jedes Raffrohr 18 verläuft eine Öleinspritzleitung 36, an welche am Öffnungsende des Raffrohrs eine als Einstoff-Düse ausgebildete Einspritzdüse 38 angeschlossen ist. Die Einspritzleitung 36 ist am inneren Ende des Raffrohrs 18 durch eine Rohröffnung und einen Schlitz in der Halterung 16 radial nach auswärts herausgeführt und mit einem Anschluss 40 für ein flexiblen Schlauch 42 versehen, der zu einem elektromagnetisch betätigbaren 2/2-Wegeventil 44 führt. Für jede Einspritzdüse 38 ist somit ein Wegeventil 44 vorhanden. Die Eingangsseiten der Ventile 44 sind über Leitungen 46 an den Ausgang einer Einspritzpumpe 48 angeschlossen, die von einem Elektromotor 50 gesteuert antreibbar ist. Die Einspritzpumpe 48 ist eine beliebige Stosspumpe, die intermittierend Öl aus einem Vorratsbehälter 52 über eine Leitung 54 ansaugt und je nach dem, welches der beiden Ventile 44 geöffnet ist, zu der einen oder anderen Einspritzdüse 38 pumpt. Vorzugsweise ist die Einspritzpumpe eine gewöhnliche Kolbeneinspritzpumpe, wie sie vor allem auch in Kraftfahrzeugen verwendet wird.

Die Einspritzpumpe 48 ist bei Öffnung des entsprechenden Ventils 44 während des Raffvorgangs eingeschaltet, bei welchem das Raffrohr 18 mit der Düse 38, vom Kraftzylinder 22 gesteuert, entsprechend der zunehmenden Länge der Schlauchraupe 38 aus dem aufgeblähten Bereich 34 des Schlauchmaterials 26 zurückfährt. Da die Länge des die Schlauchraupe bildenden Schlauchmaterials um ein Vielfaches grösser ist als die Länge der Raupe selbst, überholt das Schlauchmaterial 34 hierbei die zurückfahrende Einspritzdüse 38 und wird auf seiner Innenseite mit dem in fein verstäubtem Zustand aus der Düse 38 austretenden Öl beschichtet. Da der Ölstrahl oder -nebel schräg nach hinten gerichtet ist und mit jedem Impuls eine bestimmte Schlauchlänge erfasst, ergibt sich bei entsprechender Einstellung der Einspritzfolge im Verhältnis zu der Überholbewegung des Schlauchmaterials eine durchgehende Beschichtung der Innenseite des Schlauchmaterials mit Öl.

Wenn das freie Ende des Raffrohrs 18 an dem Raffwerkzeug 20 angelangt ist, werden dieses und die Einspritzpumpe 48 abgeschaltet, das Raffrohr 18 wird mit Hilfe des Kraftzylinders 22 völlig aus dem Raffwerkzeug herausgezogen, und eine Schneideinrichtung 56 trennt die auf dem Raffrohr 18 gebildete Schlauchraupe 28 von dem übrigen Schlauchmaterial 26 ab. Nun wird die Revolvereinrichtung betätigt und vertauscht durch Drehen der Revolverscheibe 14 das die Schlauchraupe 28 tragende Raffrohr 18 mit dem anderen Raffrohr 18, von welchem ggf. die zuvor gebildete Schlauchraupe inzwischen entfernt worden ist. Durch erneutes Betätigen des Kraftzylinders 22 in umgekehrter Richtung fährt das leere Raffrohr 18 durch das Raffwerkzeug 20 bis in seine vorderste Stellung unmittelbar vor den Quetschwalzen 24.

Es leuchtet ein, dass nach dem Abschalten des Raffwerkzeugs 20 und der Einspritzpumpe 48 der grösste Teil des aufgeblähten Schlauchabschnitts 34 ungeölt ist. Um zu verhindern, dass bei erneuter Einschaltung des Raffwerkzeugs nach dem Wiedervorfahren des Raffrohrs 18 dieser Schlauchabschnitt ohne Ölschicht gerafft wird, wird die Einspritzpumpe bereits unmittelbar zu Beginn der Einfahrbewegung des Raffrohrs 18 in das Raffwerkzeug 20 wieder eingeschaltet.

Der vorstehend beschriebene Vorgang wiederholt sich nun von neuem, bis die auf dem bisher leeren Raffrohr 18 gebildete Schlauchraupe die gewünschte Länge erreicht hat. Nachdem dann das Raffrohr völlig aus dem Bereiche des Raffwerkzeugs 20 herausgefahren ist und das Schneidwerkzeug 56 die Schlauchraupe vom übrigen Schlauchstrang abgetrennt hat, schaltet die Revolvereinrichtung diesmal in entgegengesetzte Richtung, um ein Verdrillen der elastischen Schläuche 42 zu verhindern. Auf diese Weise ist es möglich, die Verbindung zwischen der Einspritzpumpe 48 den Einspritzdüsen 38 ohne Abdichtung zwischen drehenden Teilen auszuführen. Versuche haben gezeigt, dass die verhältnismässig kurzen elastischen Leitungsabschnitte 42 trotz ihrer Elastizität keine wesentliche Minderung des Einspritzdrucks bewirken.

**Patentansprüche**

1. Verfahren zum innenseitigen Ölen von schlauchförmigem Verpackungsmaterial während dessen axialer Raffung zu Schlauchraupen, wobei das Schlauchmaterial zwischen einer Abdichtstelle und der Raffstelle durch Einleitung von unter Überdruck stehender Luft aufgebläht wird und in den aufgeblähten Bereich Öl gegen die Innenseite des Schlauchmaterials eingespritzt wird, dadurch gekennzeichnet, dass die Einspritzung intermittierend ohne Treibluft erfolgt, wobei mit jedem Einspritzimpuls eine bestimmte Länge des Schlauchmaterials benetzt und die Impulsfolge im Verhältnis zur Fortbewegung des Schlauchmaterials derart bemessen wird, dass sich eine durchgehende Beschichtung des Schlauchmaterials mit dem eingespritzten Öl ergibt.

2. Verfahren nach Anspruch 1, dadurch gekennzeichnet, dass die Einspritzung unter einem Öldruck von mindestens 10 bar erfolgt.

3. Verfahren nach Anspruch 1 oder 2, dadurch gekennzeichnet, dass die Dauer eines jeden Einspritzimpulses in der Grössenordnung von 1–10 msec. liegt.

4. Verfahren nach einem der Ansprüche 1 bis 3, bei welchem die Einspritzstelle des Öls während des Raffens einer anschliessend vom ungerafften Schlauchmaterial abgetrennten Schlauchraupe gesteuert von einer Anfangsstellung nahe der Quetschstelle in eine Endstellung hinter der Raffstelle verfährt und die Öleinspritzung bei Erreichen der Endstellung abgeschaltet wird, dadurch gekennzeichnet, dass die Öleinspritzung bereits beim Wiedervorfahren in die Anfangsstellung erneut zugeschaltet wird.

5. Anordnung zur Durchführung des Verfahrens nach einem der Ansprüche 1 bis 4 bei einer Raffvorrichtung mit einem hinter einem Raffwerkzeug (20) fliegend gelagerten und durch das Raffwerkzeug (20) bis zu einem Quetschwalzenpaar (24) vor- und während des Raffens gesteuert wieder zurückfahrbaren Raffrohr (18), durch welches Luft unter Überdruck zum Aufblähen des Schlauchmaterials zwischen den Quetschwalzen (24) und dem Raffwerkzeug (20) zuführbar ist und das an seinem Öffnungsende eine Düse (38) zum Einspritzen des durch eine Leitung innerhalb des Rohres zugeführten Öls aufweist, dadurch gekennzeichnet, dass die Einspritzdüse (38) als Einstoff-Düse ausgebildet und an eine intermittierend arbeitende Stosspumpe angeschlossen ist.

6. Anordnung nach Anspruch 5, dadurch gekennzeichnet, dass die Pumpe eine beliebig ein- und ausschaltbare herkömmliche Einspritzpumpe (48) ist.

7. Anordnung nach Anspruch 5 oder 6 bei einer Raffvorrichtung mit zwei an einer drehbaren Revolvereinrichtung (14) zum abwechselnden Instellungbringen diametral zur Drehachse (30) gegenüberliegend angeordneten Raffrohren (18), dadurch gekennzeichnet, dass die Revolvereinrichtung (14) um ihren Schaltwinkel vor- und zurückschaltbar ist.

8. Anordnung nach Anspruch 7, dadurch gekennzeichnet, dass in den Verbindungsleitungen (36, 42, 46) zwischen der Einspritzpumpe (48) und den Einspritzdüsen (38) elektromagnetisch gesteuerte Ventile (44) vorgesehen sind.

## Claims

1. Method for oiling the inside surface of tubular packing material during the axial shirring thereof to form corrugated flexible tube lengths, the tubular material being inflated by introduction of air under excess pressure between a sealing zone and the shirring zone, and oil being injected into the inflated region against the inside surface of the tubular material, characterised in that the injection is effected intermittently without blowing air, a specific length of the tubular material being wetted at each injection burst, and the burst sequence is so dimensioned in relation to the onward movement of the tubular material that a continuous coating of the tubular material with the injected oil is brought about.

2. Method according to claim 1, characterised in that the injection is effected under an oil pressure of at least 10 bars.

3. Method according to claim 1 or 2, characterised in that the duration of each injection burst is of the order of magnitude of 1–10 msec.

4. Method according to one of claims 1 to 3, wherein the injection zone for the oil moves in controlled manner from an initial position near to the nip zone into an end position which is after the shirring zone during the shirring of a length of corrugated flexible tube which is subsequently severed from the unshirred tubular material, and the injection of oil is switched off when the end position is reached, characterised in that the injection of oil is again switched on already on renewed advance into the initial position.

5. Arrangement for carrying out the method according to one of claims 1 to 4 in a shirring apparatus having a shirring tube (18) which is mounted in overhung manner after a shirring tool (20) and which can travel forwardly through the shirring tool (20) to a pair of nip rolls (24) and back again during the shirring operation in controlled manner, and through which air can be introduced under excess pressure for inflating the tubular material between the nip rolls (24) and the shirring tool (20) and which at its opening end comprises a nozzle (38) for injecting the oil which is introduced through a conduit situated within the tube, characterised in that the injection nozzle (38) is constructed as a single-substance nozzle, and is connected to an intermittently operating pressure pump.

6. Arrangement according to claim 5, characterised in that the pump is a conventional injection pump (48) adapted to be optionally switched on and off as desired.

7. Arrangement according to claim 5 or 6 in a shirring apparatus having two shirring tubes (18) situated diametrically opposite relatively to the axis of rotation (30) on a rotatable revolver head apparatus (14) for being brought into position alternately, characterised in that the revolver head apparatus (14) is adapted to be shifted forwardly and back again through its angle of shift.

8. Arrangement according to claim 7, characterised in that electromagnetically controlled valves (44) are provided in the connecting conduits (36, 42, 46) between the injection pump (48) and the injection nozzles (38).

## Revendications

1. Procédé pour huiler la surface intérieure de tubes d'emballage pendant leur plissement axial en accordéon, de façon que la matière constitutive du tube soit gonflée entre un point d'étanchéité et un point de plissage par l'introduction d'air comprimé, de l'huile étant pulvérisée, dans la zone soumise à ce gonflage, contre la surface intérieure de la matière constitutive du tube, ce procédé étant caractérisé en ce que la pulvérisation s'effectue de façon intermittente, sans utiliser d'air propulseur, afin qu'à chaque impulsion de pulvérisation une longueur déterminée de la matière tubulaire soit imprégnée et que la séquence d'impulsions soit dosée de telle sorte qu'il se produise, par rapport au mouvement d'avance de la matière tubulaire, une enduction continue de cette matière tubulaire par l'huile pulvérisée.

2. Procédé selon la revendication 1, caractérisé en ce que la pulvérisation s'effectue sous une pression d'huile d'au moins 10 bars.

3. Procédé selon l'une ou l'autre des revendications 1 ou 2, caractérisé en ce que la durée d'une impulsion de pulvérisation se situe entre 1 et 10 millisecondes.

4. Procédé selon l'une quelconque des revendications 1 à 3, dans lequel le point de pulvérisation de l'huile, pendant le plissage d'un pli adjacent du tube qui se raccorde au matériau non-plissé du tube, est commandé de façon qu'il se déplace entre une position initiale proche du point d'aplatissage du tube et une position terminale située derrière le point de plissage, la pulvérisation d'huile étant interrompue au moment où l'on atteint ladite position terminale, ce procédé étant caractérisé en ce que la pulvérisation d'huile est rétablie dans la position initiale dès la reprise du mouvement d'avance.

5. Installation pour la mise en œuvre du procédé selon l'une quelconque des revendications 1 à 4, comportant d'une part un dispositif de plissage pourvu d'un mandrin mobile de plissage (18) monté en porte-à-faux derrière l'outil de plissage (20) et pouvant traverser cet outil (20) jusqu'à atteindre un jeu de deux cylindres aplatisseurs (24) en marche avant et revenir vers l'arrière pendant le plissage, ce mandrin (18) servant à véhiculer l'air comprimé pour gonfler la matière du tube à plisser entre les cylindres aplatisseurs (24) et l'outil de plissage (20), et, d'autre part, à l'extrémité de sortie du mandrin, un injecteur (38) pour pulvériser l'huile et dont l'alimentation s'effectue par un tuyau disposé à l'intérieur de ce mandrin de plissage (18), cette installation étant caractérisée en ce que l'injecteur (38) est constitué par un élément indépendant et relié à une pompe à impulsions (48) à fonctionnement intermittent.

6. Installation suivant la revendication 5, caractérisée en ce que la pompe (48) est une pompe de pulvérisation de type traditionnel que l'on peut mettre en circuit et hors-circuit à volonté.

7. Installation suivant l'une quelconque des revendications 5 ou 6, comportant un dispositif de plissage formé par deux mandrins de plissage (18) diamétralement opposés par rapport à l'axe de rotation d'un dispositif à plateau revolver rotatif (14) sur lequel ils sont montés, de façon à pouvoir être mis alternativement en position de travail, cette installation étant caractérisée en ce que le dispositif à plateau revolver rotatif (14) peut être commuté à tour de rôle en avant et en arrière autour de son angle de commutation.

8. Installation suivant la revendication 7, caractérisée en ce que des valves (44) à commande électromagnétique sont prévues dans les conduites de raccordement (36, 42, 46) entre la pompe à injection (48) et les injecteurs (38).

FIG.1

FIG.2